# EUROPEAN PATENT SPECIFICATION

(11) **EP 3 435 235 B1**
(45) Date of publication and mention of the grant of the patent: **18.11.2020**
(21) Application number: 17769309.0
(22) Date of filing: 09.03.2017
(51) Int. Cl.: G06F 11/14

(54) **METHOD AND DEVICE FOR EXECUTING DATA RECOVERY OPERATION**
VERFAHREN UND VORRICHTUNG ZUR AUSFÜHRUNG VON EINES DATENWIEDERHERSTELLUNGSVORGANGS
PROCÉDÉ ET DISPOSITIF D'EXÉCUTION D'UNE OPÉRATION DE RÉCUPÉRATION DE DONNÉES

(30) Priority: 22.03.2016 CN 201610166586
(43) Date of publication of application: 30.01.2019
(73) Proprietor: Alibaba Group Holding Limited, Grand Cayman (KY)
(72) Inventor: ZHENG, Xiaowen, Hangzhou Zhejiang 311121 (CN)
(74) Representative: Finnegan Europe LLP
(86) International application number: PCT/CN2017/076036
(87) International publication number: WO 2017/162032

(56) References cited:
- CN-A- 101 329 642
- CN-A- 101 436 207
- CN-A- 103 034 636
- CN-A- 103 761 161
- US-A1- 2005 283 665
- US-A1- 2010 169 592
- US-A1- 2013 151 895
- US-A1- 2013 151 895

## Description

### Technical Field

The present invention relates to the field of computers, and in particular, to a method and an apparatus for executing a data recovery operation.

### Background Art

An Open Data Processing Service (ODPS) is a distributed massive data processing platform independently developed by ALIYUN. The ODPS provides rich data processing functions and flexible programming frameworks, and is applied to fields such as data analysis, mining, and business intelligence. The ODPS uses an abstract job processing framework to unify various computing tasks in different scenarios on the same platform, so that the computing tasks share security, storage, data management, and resource scheduling. As such, a uniform programming port and interface are provided for various data processing tasks from different user requirements.

Metadata refers to information that describes data attributes, and is used for supporting functions such as storage location indication, historical data, resource search, file recording and so on. In other words, the Metadata is data about other data, or structured data for providing related information of a certain type of resource. The metadata is used for identifying a resource, evaluating a resource, and tracking changes of a resource in a use process, so as to achieve easy and efficient management of a large quantity of networked data and achieve effective discovery, search, and integrated organization of information resources as well as effective management of used resources. The metadata mainly has the following basic characteristics:
a) The metadata can be shared once established. The structure and integrity of the metadata rely on the value and a use environment of information resources. A development and utilization environment of the metadata is usually a changing distributed environment. No single format can completely meet different requirements of different groups.
b) First of all, the metadata is an encoding system. The metadata is an encoding system for describing digital information resources, especially network information resources. This results in a fundamental difference between the metadata and a conventional data encoding system. The most important feature and function of the metadata is to establish a machine-understandable framework for digital information resources.

The metadata system constructs a logic framework and a basic model of e-govemment affairs, thus determining functional features, operational modes, and overall performance of system operation of the e-govemment affairs. All operations of the e-govemment affairs are implemented based on the metadata, which mainly have the following functions: a description function, an integration function, a control function, and an agent function.

The metadata is also data, and therefore can also be stored in and acquired from a database by using a method similar to that for data. If an organization providing a data element also provides metadata of the data element, use of the data element will become accurate and efficient. When using data, a user can first view metadata of the data to acquire required information.

Currently, a data versioning system in a large-scale or super-large-scale data set scenario already exists in a distributed data processing platform system. Through the system, a user can easily implement operations such as recovering data, restoring a time point, undoing a change, redoing data, and so on.

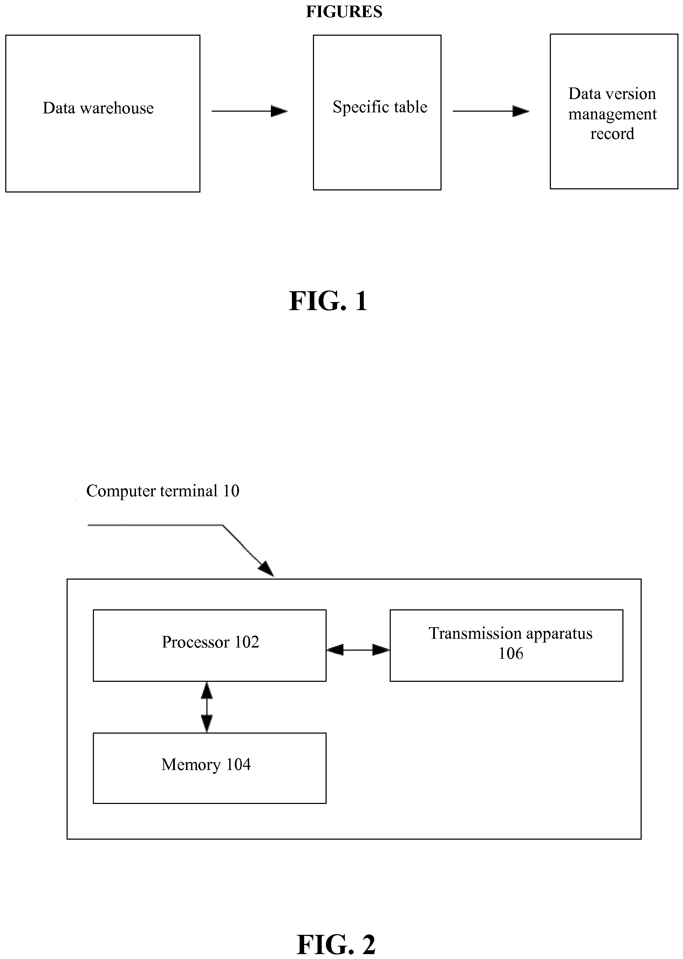

FIG. 1 is a schematic diagram of a process of generating a data version management record by a distributed data processing platform system provided according to the related technology. As shown in FIG. 1, if the system employs a chained data recovery manner in the data recovery process, data recovery operations will depend on each other. In other words, if a user needs to recover an earlier version, it is necessary to roll back sequentially to the specified version according to a current Change Log (which refers to a change log of data operations, and can be used for data recovery) record.

For example, Table 1 is an example of performing data recovery in a chained data recovery manner in the related technology. As shown in Table 1:

**Table 1**

| LogId | Type | Time | Operation | Status |
|---|---|---|---|---|
| 1452216975272855351 | TABLE | 2016-01-08 09:36:15 | CREATE | UNDOABLE |
| 1452216989166724482 | TABLE | 2016-01-08 09:36:29 | DROP | UNAVAILABLE |
| 1452217464192642287 | TABLE | 2016-01-08 09:44:24 | DROP | UNAVAILABLE |
| 1452217542349594080 | TABLE | 2016-01-08 09:45:42 | DROP | UNAVAILABLE |
| 1452218243795766348 | TABLE | 2016-01-08 09:57:23 | DROP | REDOABLE |
| 1452407548091196381 | TABLE | 2016-01-10 14:32:28 | OVERWRITE | UNDOABLE |
| 1452407625046628818 | TABLE | 2016-01-10 14:33:45 | OVERWRITE | UNDOABLE |
| 1452407726812625638 | TABLE | 2016-01-10 14:35:26 | OVERWRITE | UNDOABLE |
| 1452407775639627693 | TABLE | 2016-01-10 14:36:15 | OVERWRITE | UNDOABLE |

Using Table 1 above as an example, the data recovery manner used in the related technology is usually completed based on a changelog mechanism in a distributed database, and a specific implementation process thereof is as follows:
Step 1. A user views a currently recorded data version of a table by using an instruction having a log record query function.
Step 2. If the user specifies a particular changelog id (1452216975272855351) and uses an instruction having a log record rollback function, it is necessary to start a data recovery mechanism to recover to a specified version.
Step 3. Scan a version record of the table to acquire all operation records between the current state and the specified version, and sequentially generate a recovery plan in a reverse order. As shown in Table 1, when the user specifies a recovery to a data version of 1452216975272855351, it is necessary to sequentially recover each version in a reverse order from 1452407775639627693, until the version of 1452216975272855351 is recovered.
Step 4. Start recovery according to the generated recovery plan. The recovery is implemented by operating processing logic of data and metadata sequentially.

The current data version and recovery mechanism are both a job in essence, in which data and metadata will be operated. This seems the same as a user job and final processing of an internal cross-cluster copy job in terms of principle.

However, in the existing recovery mechanism, recovery needs to be performed in a reverse order from the current status, until a specified version is recovered. The example above simply lists a small amount of data versions thereof. If online table operations are performed excessively frequently, there are possibly tens of thousands of intermediate statuses between the data version of 1452407775639627693 and the data version of 1452216975272855351. That is, thousands of operations may need to be processed sequentially during the process of recovering a specified version.

Currently, massive data processing platforms (e.g., data warehouses such as HIVE) that can be provided in the related technology do not have a management module for data recovery. A solution employed by a conventional database (e.g., MYSQL) is to acquire and save difference data of each operation, so that recovery can be performed according to the stored difference data in a process of performing a subsequent recovery operation. This causes great dependency in a massive data processing system, and the data recovery is highly complex and highly risky.

In conclusion, the data recovery manner that can be provided in the current related technology is very likely to cause the following technical difficulties that need to be solved urgently:
The complexity of data recovery is significantly increased. The data recovery involves many data and metadata operations, resulting in a risk of data inconsistency and causing a failure rate of data recovery to increase, thus directly causing the failure of data recovery or data loss due to mismatching between data and metadata. In addition, such a reverse-order recovery manner also greatly increases the overheads of required recovery time.

It can be seen that the manner of recovering data in a reverse order based on versions can cause a significant increase in the recovery time. Moreover, this data recovery behavior needs to be completed through a series of operations on data and metadata, thus increasing the complexity of user operations. In addition, this data recovery manner may also increase a conflict probability of mechanisms such as a system internal replication mechanism, thus increasing the possibility of a user operation exception or a recovery exception, bringing about a data recovery failure risk.

US 2013/151895 discloses an apparatus and method for managing databases of active node and standby node of main memory database management systems.

CN 103761161 discloses a method, a server and a system for restoring data.

US 2005/283665 discloses storing object recovery information within the object.

US 2010/169592 discloses generating a recovery snapshot and creating a virtual view of the recovery snapshot.

Currently, no effective solution has been put forward for the foregoing problems.

### Summary of the Invention

Embodiments of the present invention, which is defined in detail in the appended independent claims, provide a method and an apparatus for executing a data recovery operation, so as to at least partially solve the technical problem mentioned in the related technology that in a recovery mechanism of a distributed data processing platform system, a specified target change log can be recovered from the current latest change log only after sequential rollback of multiple intermediate change logs, and the operation is relatively complex and easily causes data loss.

According to an aspect of embodiments of the present invention, a method for executing a data recovery operation is provided, including:
acquiring identification information of a first change log to be recovered to; searching for the first change log according to the identification information; and recovering the first change log from a second change log according to user data information and metadata information that are recorded in the latest second change log as well as user data information and metadata information that are recorded in the first change log, wherein multiple to-be-undone change logs exist between the second change log and the first change log.

Optionally, the step of recovering a second change log to the first change log according to user data information and metadata information that are recorded in the second change log as well as user data information and metadata information that are recorded in the first change log includes: parsing out first original user data and first original metadata from the first change log; and parsing out second original user data and second original metadata from the second change log, recovering the second original user data to the first original user data, and recovering the second original metadata to the first original metadata.

Optionally, the step of recovering a second change log to the first change log according to user data information and metadata information that are recorded in the second change log as well as user data information and metadata information that are recorded in the first change log includes: parsing out modified user data and modified metadata from the second change log, recovering the modified user data to the first original user data, and recovering the modified metadata to the first original metadata, wherein the modified user data and the modified metadata are obtained by modifying, according to a type of an operation to modify an object recorded in the second change log, original user data and original metadata that are recorded in the second change log.

Optionally, the step of searching for the first change log according to the identification information includes at least one of the following: acquiring change log list information by adding a list name into a change log query command or acquiring change log partition information by adding a partition name into a change log query command, and searching for the first change log in the change log list information or the change log partition information according to the identification information; and searching for the first change log by adding a list name and the identification information into a change log query command or adding a partition name and the identification information into a change log query command.

Optionally, the step of acquiring identification information of the first change log includes: receiving a control instruction for triggering a data recovery operation, wherein the control instruction carries the identification information; and performing an authentication operation on the control instruction, and acquiring the identification information from the control instruction if the authentication succeeds.

Optionally, after the step of recovering a second change log to the first change log according to user data information and metadata information that are recorded in the second change log as well as user data information and metadata information that are recorded in the first change log, the method further includes: returning prompt information corresponding to the control instruction, wherein the prompt information is used for representing that the second change log has been successfully recovered to the first change log.

According to another aspect of the embodiments of the present invention, an apparatus for executing a data recovery operation is further provided, including:
an acquisition module configured to acquire identification information of a first change log to be recovered to; a searching module configured to search for the first change log according to the identification information; and a recovery module configured to recover a second change log to the first change log according to user data information and metadata information that are recorded in the latest second change log as well as user data information and metadata information that are recorded in the first change log, wherein multiple to-be-undone change logs exist between the second change log and the first change log.

Optionally, the recovery module includes: a parsing unit configured to parse out first original user data and first original metadata from the first change log; and a recovery unit configured to parse out second original user data and second original metadata from the second change log, recover the second original user data to the first original user data, and recover the second original metadata to the first original metadata.

Optionally, the recovery module includes: a parsing unit configured to parse out first original user data and first original metadata from the first change log; and a recovery unit configured to parse out modified user data and modified metadata from the second change log, recover the modified user data to the first original user data, and recover the modified metadata to the first original metadata, wherein the modified user data and the modified metadata are obtained by modifying, according to a type of an operation to modify an object recorded in the second change log, original user data and original metadata that are recorded in the second change log.

Optionally, the searching module is configured to acquire change log list information by adding a list name into a change log query command or acquire change log partition information by adding a partition name into a change log query command, and search for the first change log in the change log list information or the change log partition information according to the identification information; or search for the first change log by adding a list name and the identification information into a change log query command or adding a partition name and the identification information into a change log query command.

Optionally, the acquisition module includes: a receiving unit configured to receive a control instruction for triggering a data recovery operation, wherein the control instruction carries the identification information; and an acquisition unit configured to perform an authentication operation on the control instruction, and acquire the identification information from the control instruction if the authentication succeeds.

Optionally, the apparatus further includes: a feedback module configured to return prompt information corresponding to the control instruction, wherein the prompt information is used for representing that the second change log has been successfully recovered to the first change log.

In the embodiments of the present invention, a manner of recovering the current latest change log to a specified target change log by only executing one recovery operation is employed. A latest change log is directly recovered to a target change log according to user data information and metadata information that are recorded in the latest change log as well as user data information and metadata information that are recorded in the target change log, while a processing procedure of sequential rollback of multiple to-be-undone change logs existing between the latest change log and the target change log is omitted, thus achieving the technical effects of reducing operation complexity of a distributed database recovery mechanism, improving a success rate of the distributed database recovery mechanism, and reducing time overheads of the distributed database recovery mechanism. As such, the present invention solves the technical problem mentioned in the related technology that in a recovery mechanism of a distributed data processing platform system, the current latest change log can be recovered to a specified target change log only after sequential rollback of multiple intermediate change logs, and the operation is relatively complex and easily causes data loss.

### Brief Description of the Drawings

The accompanying drawings described here are used to provide further comprehension of the present invention, and constitute a part of the present application. The schematic embodiments of the present invention and the description thereof are used to illustrate the present invention, and do not limit the present invention improperly. In the drawings:
FIG. 1 is a schematic diagram of a process of generating a data version management record by a distributed data processing platform system provided according to the related technology;
FIG. 2 is a structural block diagram of hardware of a computer terminal of a method for executing a data recovery operation according to an embodiment of the present invention;
FIG. 3 is a flowchart of a method for executing a data recovery operation according to an embodiment of the present invention;
FIG. 4 is a schematic diagram of comparison between different log change record querying manners according to a preferred embodiment of the present invention;
FIG. 5 is a structural block diagram of an apparatus for executing a data recovery operation according to an embodiment of the present invention;
FIG. 6 is a structural block diagram of an apparatus for executing a data recovery operation according to a preferred embodiment of the present invention; and
FIG. 7 is a structural block diagram of a computer terminal according to an embodiment of the present invention.

### Detailed Description

To make those skilled in the technical field better understand the solution of the present invention, the technical solutions in the embodiments of the present invention are described clearly and completely in the following with reference to the accompanying drawings in the embodiments of the present invention. Apparently, the described embodiments are merely some, rather than all, of the embodiments of the present invention. Based on the embodiments of the present invention, all other embodiments obtained by those of ordinary skill in the art without creative efforts should belong to the protection scope of the present invention.

It should be noted that the relation terms such as "first" and "second" in the specification, claims, and the foregoing accompanying drawings of the present invention are merely used to distinguish similar objects, and are not necessarily used to describe a specific sequence or order. It should be understood that data used in such a manner can be exchanged in a proper case, so that the embodiments of the present invention described here can be implemented in sequences other than the sequences depicted or described here. In addition, the terms "include," "comprise" or their other variations are intended to cover non-exclusive inclusion. For example, a process, method, system, product or device including a series of steps or units is not necessarily limited to the steps or units clearly listed, but can include other steps or units not clearly listed or include steps or units inherent to the process, method, product or device.

### Embodiment 1

According to the embodiment of the present invention, a method embodiment of a method for executing a data recovery operation is further provided. It should be noted that steps shown in the flowchart of the accompanying drawings can be executed in a computer system such as a group of computer executable instructions. Moreover, although a logic sequence is shown in the flowchart, the depicted or described steps can be executed in a sequence different from the sequence here in some cases.

The method embodiment provided in Embodiment 1 of the present application can be executed in a mobile terminal, a computer terminal or a similar arithmetic unit. Using running on a computer terminal as an example, FIG. 2 is a structural block diagram of hardware of a computer terminal of a method for executing a data recovery operation according to an embodiment of the present invention. As shown in FIG. 2, the computer terminal 10 can include one or more (only one is shown in the figure) processors 102 (the processor 102 can include, but is not limited to, a microprocessor MCU, a programmable logic device FPGA or other processing apparatuses), a memory 104 configured to store data, and a transmission apparatus 106 for a communication function. Those of ordinary skill in the art can understand that the structure shown in FIG. 2 is merely an example and does not limit the structure of the foregoing electronic apparatus. For example, the computer terminal 10 can further include components more or fewer than those shown in FIG. 2, or have a configuration different from that shown in FIG. 2.

The memory 104 can be configured to store a software program and a module of application software, for example, a program instruction/module corresponding to the method for executing a data recovery operation in the embodiment of the present invention. The processor 102 runs the software program and a module stored in the memory 104 to execute various functional applications and data processing, that is, implement the foregoing method for executing a data recovery operation. The memory 104 can include a high-speed random access memory, and can also include a non-volatile memory such as one or more magnetic storage apparatuses, flash memories, or other non-volatile solid-state memories. In some examples, the memory 104 can further include memories remotely disposed with respect to the processor 102. The remote memories can be connected to the computer terminal 10 through a network. Examples of the foregoing network include, but are not limited to, the Internet, an enterprise intranet, a local area network, a mobile communications network, and their combinations.

The transmission apparatus 106 is configured to receive or send data through a network. Specific examples of the foregoing network can include a wireless network provided by a communication provider of the computer terminal 10. In an example, the transmission apparatus 106 includes a Network Interface Controller (NIC), which can be connected to other network devices through a base station and thus can communicate with the Internet. In an example, the transmission apparatus 106 can be a Radio Frequency (RF) module, which is configured to communicate with the Internet in a wireless manner.

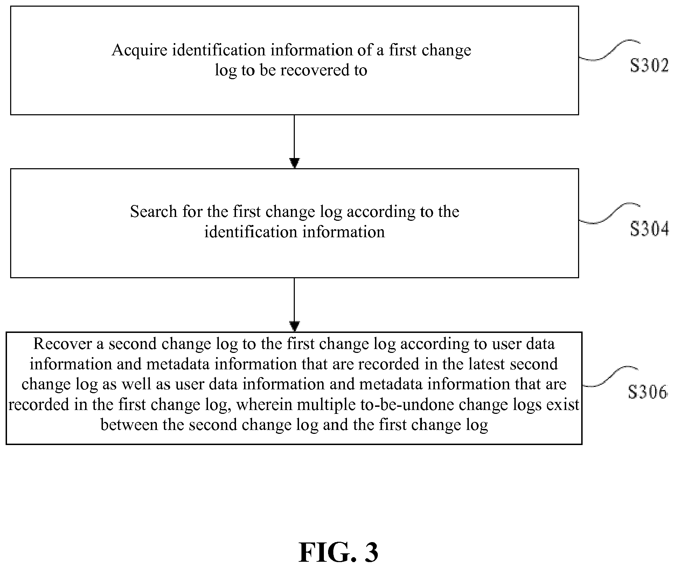

In the foregoing operation environment, the present application provides a method for executing a data recovery operation as shown in FIG. 3. FIG. 3 is a flowchart of a method for executing a data recovery operation according to an embodiment of the present invention. As shown in FIG. 3, the method can include the following processing steps:
Step S302: Identification information of a first change log to be recovered to is acquired.
Step S304: The first change log is searched for according to the identification information.
Step S306: A second change log is recovered to the first change log according to user data information and metadata information that are recorded in the latest second change log as well as user data information and metadata information that are recorded in the first change log, wherein multiple to-be-undone change logs exist between the second change log and the first change log.

Through the technical solution provided by the embodiment of the present invention, a manner of recovering the current latest change log (equivalent to the foregoing second change log) to a specified target change log (equivalent to the foregoing first change log) only by executing one recovery operation is employed. A latest change log is directly recovered to a target change log according to user data information and metadata information that are recorded in the latest change log as well as user data information and metadata information that are recorded in the target change log, while a processing procedure of sequential rollback of multiple to-be-undone change logs existing between the latest change log and the target change log is omitted, thus achieving the technical effects of reducing operation complexity of a distributed database recovery mechanism and improving a success rate of the distributed database recovery mechanism. As such, the embodiment of the present invention solves the technical problem mentioned in the related technology that in a recovery mechanism of a distributed data processing platform system, the current latest change log can be recovered to a specified target change log only after sequential rollback of multiple intermediate change logs, and the operation is relatively complex and easily causes data loss.

In a process of executing data processing by using the distributed data processing platform system, data is usually deleted by mistake or overwritten by mistake due to misoperations. Therefore, a data version management recovery module (such as ChangeLogs) of the distributed data processing platform system provides a massive data versioning mechanism and a data recovery tool. That is, the data version management recovery module can be used to undo massive data or recover to any historical version of data, and view modified content of each version. Therefore, the data version management recovery module can recover data in time after the data is deleted by mistake or overwritten by mistake, so as to ensure security of data maintenance.

According to a retention time of the data version management recovery module, it can be determined whether a function of the data version management recovery module is enabled. For example, when the retention time of the data version management recovery module is less than a preset duration, it indicates that the function of the data version management recovery module is disabled, and the data version management recovery module is not recorded. When the retention time of the data version management recovery module is greater than or equal to the preset duration, it indicates that the function of the data version management recovery module is enabled currently, and the data version management recovery module will be recorded automatically. In the range of the retention time of the data version management recovery module, any modification operation that has been executed can be recovered immediately.

Each change log in the data version management recovery module completely records a type of an operation to modify a table or partition, a user, a query, environment information, original metadata and full-data snapshots as well as modified metadata and full-data snapshots. A user can use the data version management recovery module to execute operations such as rollback or data recovery.

Optionally, in step S306, the step of recovering a second change log to the first change log according to user data information and metadata information that are recorded in the second change log as well as user data information and metadata information that are recorded in the first change log can include the following steps:
Step S3061: First original user data and first original metadata are parsed out from the first change log.

The user data information recorded in the first change log includes: first original user data and first original metadata before a modification operation corresponding to an operation type included in the first change log is executed on a processing object (partition or list) as well as modified user data and modified metadata after the modification operation corresponding to the operation type included in the first change log is executed. If the current latest change log needs to be recovered to a change log specified by a user, the final result is that user data information and metadata information in the current latest change log are recovered to the first original user data and the first original metadata that exist before the modification operation corresponding to the operation type included in the first change log is executed on the processing object (partition or list). Therefore, the first original user data and the first original metadata need to be parsed out (or extracted from) the first change log. That is, the target object to be recovered to is the first original user data and the first original metadata.

Step S3062: Second original user data and second original metadata are parsed out from the second change log, the second original user data is recovered to the first original user data, and the second original metadata is recovered to the first original metadata; or modified user data and modified metadata are parsed out from the second change log, the modified user data is recovered to the first original user data, and the modified metadata is recovered to the first original metadata, wherein the modified user data and the modified metadata are obtained by modifying, according to a type of an operation to modify an object recorded in the second change log, original user data and original metadata that are recorded in the second change log.

With respect to the foregoing target object to be recovered to, a source object of recovery can be second original user data and second original metadata before a modification operation corresponding to an operation type included in the second change log is executed on the processing object (partition or list), or can be modified user data and modified metadata after the modification operation corresponding to the operation type included in the second change log is executed. Therefore, once the target object to be recovered to and the source object of recovery are determined, with only one data recovery operation, the second original user data can be directly recovered to the first original user data and the second original metadata can be directly recovered to the first original metadata; or the modified user data can be recovered to the first original user data and the modified metadata can be recovered to the first original metadata.

For example, a user executes a first operation on ALIPAY at 2016-01-08 09:36:15, and a personal account is created. At this point, a first change record is generated. User data information of the first change record mainly includes: user, 2016-01-08 09:36:15, specific amount (0 Yuan) in the newly created account. Corresponding metadata information mainly includes: user name, creation time, account balance, and other information for describing user data attributes. Because the account is a newly created account, the balance of the newly created account is 0 Yuan.

If the user executes a second operation at 2016-01-08 09:57:23 to deposit 200 Yuan RMB into the newly created ALIPAY account, at this point, a second change record is generated. User data information of the second change record mainly includes: user, 2016-01-08 09:57:23, specific amount (200 Yuan) in the newly created account, and RMB. Corresponding metadata information mainly includes: user name, creation time, account balance, currency and other information for describing user data attributes.

If the user executes a third operation at 2016-01-09 09:52:20 to withdraw 50 Yuan RMB from the newly created ALIPAY account, a third change record is generated at this point. User data information of the third change record mainly includes: user, 2016-01-09 09:52:20, specific amount (150 Yuan) in the newly created account, and RMB. Corresponding metadata information mainly includes: user name, creation time, account balance, currency and other information for describing user data attributes. Through this operation, the current change record can include: original user data (user, 2016-01-08 09:57:23, 200 Yuan and RMB) and original metadata (user name, creation time, account balance and currency) before a modification operation is performed on a user account storage record table; and modified user data (user, 2016-01-09 09:52:20, 150 Yuan and RMB) and modified metadata (user name, creation time, account balance and currency) after the modification operation is performed on the user account storage record table.

After N-1 operations in the middle, if the user executes an N^{th} operation at 2016-01-10 14:32:28 and needs to exchange 100 Yuan RMB in the account into Japanese Yen, an N^{th} change record is generated at this point. Metadata information of the N^{th} change record may further need to include an exchange rate attribute based on the existing attribute information such as the user name, creation time, account balance, and currency. Correspondingly, Yen data and an exchange rate value (1 RMB = 17.4825 Yen) are added under the currency attribute of the user data information in addition to RMB. Through this operation, the current change record can include: original user data (user, 2016-01-10 09:40:50, 200 Yuan and RMB) and original metadata (user name, creation time, account balance and currency) before the modification operation is performed on the user account storage record table; and modified user data (user, 2016-01-10 14:32:28, 200 Yuan, RMB and Yen) and modified metadata (user name, creation time, account balance, currency and exchange rate) after the modification operation is performed on the user account storage record table.

If the user needs to recover the N^{th} change record to the third change record, first of all, the original user data (user, 2016-01-08 09:57:23, 200 Yuan and RMB) and the original metadata (user name, creation time, account balance and currency) before the modification operation is performed on the user account storage record table need to be extracted from the third change record. Next, the original user data (user, 2016-01-10 09:40:50, 200 Yuan and RMB) and the original metadata (user name, creation time, account balance and currency) before the modification operation is performed on the user account storage record table, or modified user data (user, 2016-01-10 14:32:28, 200 Yuan, RMB and Yen) and modified metadata (user name, creation time, account balance, currency and exchange rate) after the modification operation is performed on the user account storage record table are further extracted from the N^{th} change record. Then, the original user data (user, 2016-01-10 09:40:50, 200 Yuan and RMB) and the original metadata (user name, creation time, account balance and currency) can be recovered to the original user data (user, 2016-01-08 09:57:23, 200 Yuan and RMB) and the original metadata (user name, creation time, account balance and currency), and the modified user data (user, 2016-01-10 14:32:28, 200 Yuan, RMB and Yen) and the modified metadata (user name, creation time, account balance, currency and exchange rate) can also be recovered to the original user data (user, 2016-01-08 09:57:23, 200 Yuan and RMB) and the original metadata (user name, creation time, account balance and currency).

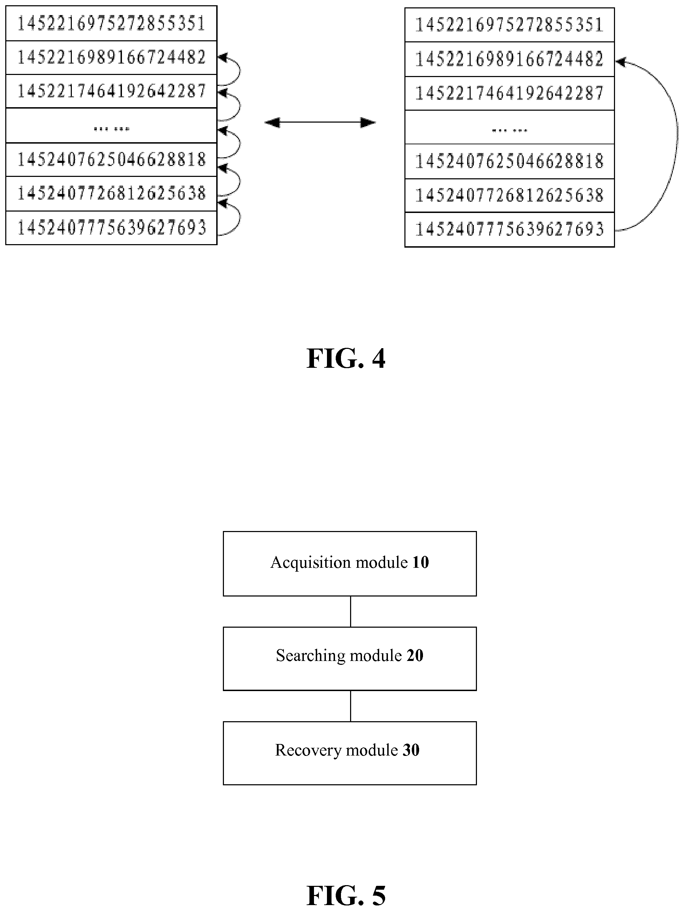

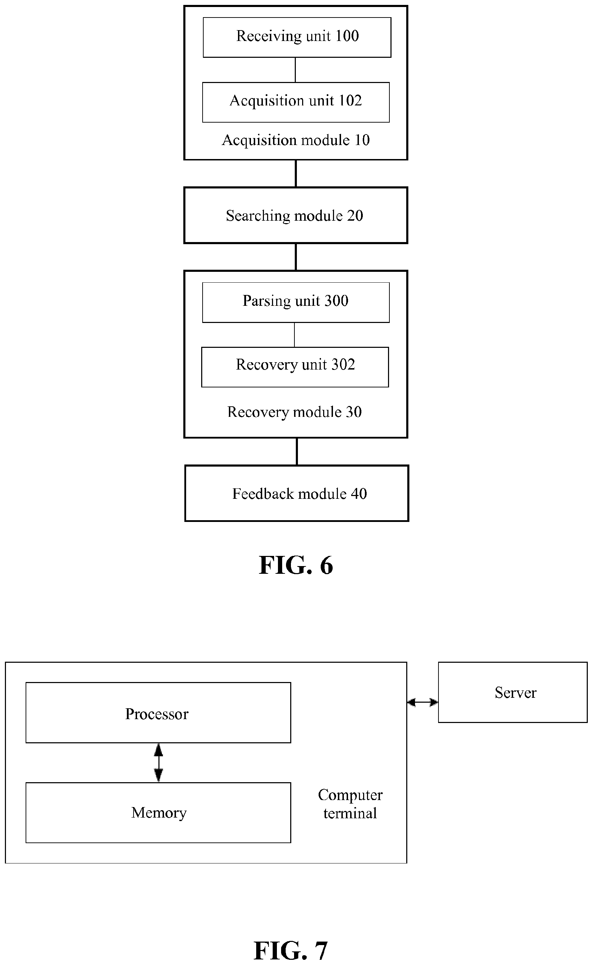

Optionally, step S304 of searching for the first change log according to the identification information can include one of the following manners:
Manner 1: acquiring change log list information by adding a list name into a change log query command or acquiring change log partition information by adding a partition name into a change log query command, and searching for the first change log in the change log list information or the change log partition information according to the identification information.
   A user of the distributed data processing platform system can query a data version management recovery module of a specific table or partition by using a syntax structure of SHOW CHANGELOGS FOR TABLE<table name>[PARTITION(<partition name>)]. Then, the change record is found from the data version management recovery module of the specific table or partition according to logld.
Manner 2: searching for the first change log by adding a list name and the identification information into a change log query command or adding a partition name and the identification information into a change log query command.

A user of the distributed data processing platform system can also directly query a change record of a specific table or partition by using a syntax of SHOW CHANGELOGS FOR TABLE<table name>[PARTITION(<partition name>)]<logId>.

The <logId> above is a unique ID of each data version management recovery module, which is essentially a non-repeated timestamp accurate to nanosecond. It can be seen from the SHOW CHANGELOGS list that when data is deleted or overwritten by mistake due to a misoperation and an exception occurs, a specific change record can be found by using the foregoing two commands, so that the user can find the problem in time and recover a data version.

Optionally, step S302 of acquiring identification information of the first change log can include the following steps:
S3021: A control instruction for triggering a data recovery operation is received, wherein the control instruction carries the identification information.
S3022: An authentication operation is performed on the control instruction, and the identification information is acquired from the control instruction if the authentication succeeds.

In a preferred embodiment, a user can specify a logld that needs to be recovered to, and can use an UNDO syntax structure (that is, UNDO TABLE<table name>[PARTITION(<partition name>)]TO<logId>) to start the data recovery mechanism. By executing only one data recovery operation, the latest change log can be recovered to the change log that needs to be reserved. Therefore, both partition data and list data that are deleted by mistake or overwritten by mistake can be recovered by using the foregoing command.

After the user specifies the logId that needs to be recovered to and starts the data recovery mechanism, it is necessary to perform distributed data processing platform system authentication on the user to judge whether the user has the right to perform a recovery operation on the change log. If the user has the right to execute the recovery operation on the change log, the logId is acquired from a command that is submitted by the user for triggering the data recovery mechanism. If the user does not have the right to execute the recovery operation on the change log, an alarm is directly sent to the user or the user is rejected to access the data version management recovery module.

Optionally, after the step of recovering a second change log to the first change log according to user data information and metadata information that are recorded in the second change log as well as user data information and metadata information that are recorded in the first change log, the method further includes: returning prompt information corresponding to the control instruction, wherein the prompt information is used for representing that the second change log has been successfully recovered to the first change log.

After the user specifies the logId that needs to be recovered to and uses an UNDO syntax structure (that is, UNDO TABLE<table name>[PARTITION(<partition name>)]TO<logId>) to start the data recovery mechanism, and then successfully recovers, by executing only one data recovery operation, the latest change log to the change log needing to be recovered to, prompt information indicating that the data recovery operation has been executed successfully and the latest change log has been recovered to the user-specified target change log can be returned to the user. Then the whole data recovery process is ended.

In order to highlight the difference between the technical solution provided by the embodiment of the present invention and the existing solution, comparison is further made with reference to the example shown in FIG. 3. FIG. 4 is a schematic diagram of comparison between different log change record querying manners according to a preferred embodiment of the present invention. As shown in FIG. 4, it is assumed that the current latest stored log record table includes the following identification information in sequence: 1452216975272855351, 1452216989166724482, 1452217464192642287, ..., 1452407625046628818, 1452407726812625638, and 1452407775639627693. Suppose that a log record of a version in which the identification information is 1452216989166724482 needs to be recovered to currently, the recovery solution provided in the related technology is as follows:
1452407775639627693→1452407726812625638→1452407625046628818→...→14522174 64192642287→1452216989166724482;
That is, rollback is performed in turn to 1452216989166724482 according to the record sequence of the change records.

Compared with the recovery solution provided in the related technology, the technical solution provided in the embodiment of the present invention is as follows:
1452407775639627693→1452216989166724482;
That is, the current latest recorded 1452407775639627693 is directly recovered to the specified version 1452216989166724482.

It should be noted that the foregoing method embodiments are all expressed as a series of action combinations for ease of description. However, those skilled in the art should know that the present invention is not limited by the described action sequence, because some steps can be performed in other sequences or simultaneously according to the present invention. Secondly, those skilled in the art should also know that the embodiments described in the specification are all preferred embodiments, and the actions and modules involved are not mandatory to the present invention.

According to the description of the foregoing implementations, those skilled in the art can clearly understand that the method for executing a data recovery operation according to the foregoing embodiment can be implemented by software plus a necessary hardware platform, and can also be implemented by hardware. In most cases, the former is a better implementation. Based on such an understanding, the technical solution of the present invention essentially or the part making contributions to the prior art can be embodied in the form of a software product. The computer software product is stored in a storage medium (such as a read-only memory (ROM)/random access memory (RAM), a magnetic disk, or an optical disc), and includes several instructions for enabling a terminal device (which can be a mobile phone, a computer, a server, a network device, or the like) to execute the methods in various embodiments of the present invention.

### Embodiment 2

According to this embodiment of the present invention, an apparatus for implementing the execution of a data recovery operation is further provided. FIG. 5 is a structural block diagram of an apparatus for executing a data recovery operation according to an embodiment of the present invention. As shown in FIG. 5, the apparatus includes: an acquisition module 10 configured to acquire identification information of a first change log to be recovered to; a searching module 20 configured to search for the first change log according to the identification information; and a recovery module 30 configured to recover a second change log to the first change log according to user data information and metadata information that are recorded in the latest second change log as well as user data information and metadata information that are recorded in the first change log, wherein multiple to-be-undone change logs exist between the second change log and the first change log.

Optionally, FIG. 6 is a structural block diagram of an apparatus for executing a data recovery operation according to a preferred embodiment of the present invention. As shown in FIG. 6, the recovery module 30 includes: a parsing unit 300 configured to parse out first original user data and first original metadata from the first change log; and a recovery unit 302 configured to parse out second original user data and second original metadata from the second change log, recover the second original user data to the first original user data, and recover the second original metadata to the first original metadata.

Optionally, the parsing unit 300 is configured to parse out first original user data and first original metadata from the first change log. The recovery unit 302 is configured to parse out modified user data and modified metadata from the second change log, recover the modified user data to the first original user data, and recover the modified metadata to the first original metadata, wherein the modified user data and the modified metadata are obtained by modifying, according to a type of an operation to modify an object recorded in the second change log, original user data and original metadata that are recoded in the second change log.

Optionally, the searching module 20 is configured to acquire change log list information by adding a list name into a change log query command or acquire change log partition information by adding a partition name into a change log query command, and search for the first change log in the change log list information or the change log partition information according to the identification information; or search for the first change log by adding a list name and the identification information into a change log query command or adding a partition name and the identification information into a change log query command.

Optionally, as shown in FIG. 6, the acquisition module 10 can include: a receiving unit 100 configured to receive a control instruction for triggering a data recovery operation, wherein the control instruction carries the identification information; and an acquisition unit 102 configured to perform an authentication operation on the control instruction, and acquire the identification information from the control instruction if the authentication succeeds.

Optionally, as shown in FIG. 6, the foregoing apparatus can further include: a feedback module 40 configured to return prompt information corresponding to the control instruction, wherein the prompt information is used for representing that the second change log has been successfully recovered to the first change log.

### Embodiment 3

This embodiment of the present invention can provide a computer terminal. The computer terminal can be any computer terminal device in a computer terminal group. Optionally, in this embodiment, the computer terminal can also be replaced with a terminal device such as a mobile terminal.

Optionally, in this embodiment, the computer terminal can be at least one network device in multiple network devices located in a computer network.

Optionally, FIG. 7 is a structural block diagram of a computer terminal according to an embodiment of the present invention. As shown in FIG. 7, the computer terminal can include: one or more (only one is shown) processors and a memory.

The memory can be configured to store a software program and a module, for example, a program instruction/module corresponding to the method and apparatus for executing a data recovery operation in the embodiments of the present invention. The processor runs the software program and module stored in the memory to execute various functional applications and data processing, that is, implement the foregoing method for executing a data recovery operation. The memory can include a high-speed random access memory, and can further include a non-volatile memory such as one or more magnetic storage apparatuses, flash memories, or other non-volatile solid-state memories. In some examples, the memory can further include memories remotely disposed with respect to the processor. The remote memories can be connected to the terminal through a network. Examples of the network include, but are not limited to, the Internet, an enterprise intranet, a local area network, a mobile communications network, and their combinations.

The processor can call the information and application program stored in the memory through a transmission apparatus to execute the following steps:
S1. Identification information of a first change log to be recovered to is acquired.
S2. The first change log is searched for according to the identification information.
S3. A second change log is recovered to the first change log according to user data information and metadata information that are recorded in the latest second change log as well as user data information and metadata information that are recorded in the first change log, wherein multiple to-be-undone change logs exist between the second change log and the first change log.

Optionally, the processor can further execute program codes of the following steps: parsing out first original user data and first original metadata from the first change log; and parsing out second original user data and second original metadata from the second change log, recovering the second original user data to the first original user data, and recovering the second original metadata to the first original metadata.

Optionally, the processor can further execute program codes of the following steps: parsing out first original user data and first original metadata from the first change log; and parsing out modified user data and modified metadata from the second change log, recovering the modified user data to the first original user data, and recovering the modified metadata to the first original metadata, wherein the modified user data and the modified metadata are obtained by modifying, according to a type of an operation to modify an object recorded in the second change log, original user data and original metadata that are recorded in the second change log.

Optionally, the processor can further execute program codes of the following steps: acquiring change log list information by adding a list name into a change log query command or acquiring change log partition information by adding a partition name into a change log query command, and searching for the first change log in the change log list information or the change log partition information according to the identification information; or searching for the first change log by adding a list name and the identification information into a change log query command or adding a partition name and the identification information into a change log query command.

Optionally, the processor can further execute program codes of the following steps: receiving a control instruction for triggering a data recovery operation, wherein the control instruction carries the identification information; and performing an authentication operation on the control instruction, and acquiring the identification information from the control instruction if the authentication succeeds.

Optionally, the processor can further execute program codes of the following step: returning prompt information corresponding to the control instruction, wherein the prompt information is used for representing that the second change log has been successfully recovered to the first change log.

In this embodiment of the present invention, a manner of recovering the current latest change log to a specified target change log only by executing one recovery operation is employed. A latest change log is directly recovered to a target change log according to user data information and metadata information that are recorded in the latest change log as well as user data information and metadata information that are recorded in the target change log, while a processing procedure of sequential rollback of multiple to-be-undone change logs existing between the latest change log and the target change log is omitted, thus achieving the technical effects of reducing operation complexity of a distributed database recovery mechanism, improving a success rate of the distributed database recovery mechanism, and reducing time overheads of the distributed database recovery mechanism. As such, this embodiment of the present invention solves the technical problem mentioned in the related technology that in a recovery mechanism of a distributed data processing platform system, the current latest change log can be recovered to a specified target change log only after sequential rollback of multiple intermediate change logs, and the operation is relatively complex and easily causes data loss.

Those of ordinary skill in the art can understand that the structure shown in FIG. 7 is merely an example. The computer terminal can also be a smart phone (such as an Android phone or an iOS phone), a tablet computer, a palmtop computer, and terminal devices such as a Mobile Internet Devices (MID), and PADs. FIG. 7 does not limit the structure of the foregoing electronic apparatus. For example, the computer terminal can further include components (such as a network interface and a display apparatus) more or fewer than those shown in FIG. 7, or have a configuration different from that shown in FIG. 7.

Those of ordinary skill in the art can understand that all or some steps in the various methods in the foregoing embodiments can be completed by a program instructing related hardware of the terminal device. The program can be stored in a computer readable storage medium. The storage medium can include: a flash disk, a ROM, a RAM, a magnetic disk, an optical disc, or the like.

### Embodiment 4

This embodiment of the present invention further provides a storage medium. Optionally, in this embodiment, the foregoing storage medium can be configured to store program codes executed by the method for executing a data recovery operation provided by Embodiment 1 above.

Optionally, in this embodiment, the storage medium can be any computer terminal in a computer terminal group in a computer network, or any mobile terminal in a mobile terminal group.

Optionally, in this embodiment, the storage medium is configured to store program codes for executing the following steps:
S1. Identification information of a first change log to be recovered to is acquired.
S2. The first change log is searched for according to the identification information.
S3. A second change log is recovered to the first change log according to user data information and metadata information that are recorded in the latest second change log as well as user data information and metadata information that are recorded in the first change log, wherein multiple to-be-undone change logs exist between the second change log and the first change log.

Optionally, in this embodiment, the storage medium is further configured to store program codes for executing the following steps: parsing out first original user data and first original metadata from the first change log; and parsing out second original user data and second original metadata from the second change log, recovering the second original user data to the first original user data, and recovering the second original metadata to the first original metadata.

Optionally, in this embodiment, the storage medium is further configured to store program codes for executing the following steps: parsing out first original user data and first original metadata from the first change log; and parsing out modified user data and modified metadata from the second change log, recovering the modified user data to the first original user data, and recovering the modified metadata to the first original metadata, wherein the modified user data and the modified metadata are obtained by modifying, according to a type of an operation to modify an object recorded in the second change log, original user data and original metadata that are recorded in the second change log.

Optionally, in this embodiment, the storage medium is further configured to store program codes for executing the following steps: acquiring change log list information by adding a list name into a change log query command or acquiring change log partition information by adding a partition name into a change log query command, and searching for the first change log in the change log list information or the change log partition information according to the identification information; and searching for the first change log by adding a list name and the identification information into a change log query command or adding a partition name and the identification information into a change log query command.

Optionally, in this embodiment, the storage medium is further configured to store program codes for executing the following steps: receiving a control instruction for triggering a data recovery operation, wherein the control instruction carries the identification information; and performing an authentication operation on the control instruction, and acquiring the identification information from the control instruction if the authentication succeeds.

Optionally, in this embodiment, the storage medium is further configured to store program codes for executing the following steps: returning prompt information corresponding to the control instruction, wherein the prompt information is used for representing that the second change log has been successfully recovered to the first change log.

The sequence numbers of the foregoing embodiments of the present invention are merely for the convenience of description, but do not imply the preference among the embodiments.

In the foregoing embodiments of the present invention, the description of each embodiment has its own focus. For content that is not detailed in a certain embodiment, reference can be made to the relevant description of other embodiments.

In the several embodiments provided in the present application, it should be understood that the disclosed technical content may be implemented in other manners. The apparatus embodiments described above are only exemplary. For example, the division of the units is merely a division based on logical functions and there can be other division manners in an actual implementation. For example, a plurality of units or components may be combined or integrated into another system, or some features may be ignored or not performed. In addition, the mutual coupling or direct coupling or communication connections displayed or discussed may be implemented by using some interfaces, and the indirect coupling or communication connections between the units or modules may be implemented electrically or in another form.

The units described as separate parts may or may not be physically separate. Parts displayed as units may or may not be physical units, i.e., they may be located in one position or distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units may be integrated into one unit. The integrated unit may be implemented in the form of hardware, or may be implemented in the form of a software functional unit.

When the integrated unit is implemented in the form of a software functional unit and sold or used as an independent product, the integrated unit may be stored in a computer readable storage medium. Based on such an understanding, the technical solutions of the present invention essentially, or the part making contributions to the prior art, or all or a part of the technical solutions may be implemented in the form of a software product. The computer software product is stored in a storage medium, and includes several instructions for instructing a computer device (which may be a personal computer, a server, a network device or the like) to perform all or some of the steps of the methods described in the embodiments of the present invention. The foregoing storage medium includes: any medium that can store program codes, such as a USB flash drive, a ROM, a RAM, a removable hard disk, a magnetic disk, or an optical disc.

Described above are only preferred embodiments of the present invention. It should be noted that those of ordinary skill in the art can further make several improvements and modifications without departing from the principle of the present application, and these improvements and modifications should also be construed as the protection scope of the present invention.

## Claims

1. A method for executing a data recovery operation, the method comprising:
acquiring identification information of a first change log to be recovered to;
searching for the first change log according to the identification information, wherein the method is **characterized by** further comprising:
recovering a second change log to the first change log according to original user data information and original metadata information recorded in the second change log, and modified user data information and modified metadata information recorded in the second change log, in addition to original user data information and original metadata information recorded in the first change log, and modified user data information and modified metadata information recorded in the first change log,
wherein multiple change logs exist between the second change log and the first change log, and wherein recovering the second change log to the first change log comprises:
parsing out first original user data and first original metadata from the first change log;
parsing out second original user data and second original metadata from the second change log;
recovering the second original user data to the first original user data; and
recovering the second original metadata to the first original metadata, or
parsing out first original user data and first original metadata from the first change log;
parsing out modified user data and modified metadata from the second change log;
recovering the modified user data to the first original user data; and
recovering the modified metadata to the first original metadata,
wherein the modified user data and the modified metadata are obtained by modifying, according to a type of an operation to modify an object recorded in the second change log, second original user data and second original metadata recorded in the second change log.

2. The method according to claim 1, wherein searching for the first change log comprises:
acquiring change log list information by adding a list name into a change log query command or acquiring change log partition information by adding a partition name into the change log query command, and searching for the first change log in the change log list information or the change log partition information according to the identification information; and/or
searching for the first change log by adding the list name and the identification information into the change log query command or adding the partition name and the identification information into the change log query command.

3. The method according to claim 1 or claim 2, wherein acquiring identification information of the first change log comprises:
receiving a control instruction for triggering a data recovery operation, wherein the control instruction carries the identification information; and
performing an authentication operation on the control instruction, and acquiring the identification information from the control instruction when the authentication succeeds.

4. The method according to claim 3, further comprising:
after recovering the second change log to the first change log, returning prompt information corresponding to the control instruction, wherein the prompt information is for representing that the second change log has been successfully recovered to the first change log.

5. A computer-readable storage medium storing instructions which, when executed by a processor of a computer system, cause the computer system to perform the method according to any of the preceding claims.

6. A computer program comprising instructions which, when the program is executed by a processor of a computer, cause the computer to carry out the method of any of claims 1 to 4.

7. An apparatus for executing a data recovery operation, the apparatus comprising:
an acquisition module (10) configured to acquire identification information of a first change log to be recovered to;
a searching module (20) configured to search for the first change log according to the identification information, wherein the apparatus is **characterized by** further comprising:
a recovery module (30) configured to recover a second change log to the first change log according to original user data information and original metadata information recorded in the second change log, and modified user data information and modified metadata information recorded in the second change log in addition to original user data information and original metadata information recorded in the first change log, wherein multiple change logs exist between the second change log and the first change log and modified user data information and modified metadata information recorded in the first change log, and wherein the recovery module comprises:
a parsing unit (300) configured to parse out first original user data and first original metadata from the first change log; and
a recovery unit (302) configured to parse out second original user data and second original metadata from the second change log, recover the second original user data to the first original user data, and recover the second original metadata to the first original metadata, or
a recovery unit (302) configured to parse out modified user data and modified metadata from the second change log, recover the modified user data to the first original user data, and recover the modified metadata to the first original metadata, wherein the modified user data and the modified metadata are obtained by modifying, according to a type of an operation to modify an object recorded in the second change log, second original user data and second original metadata recorded in the second change log.

8. The apparatus according to claim 7, wherein the searching module (20) is configured to
acquire change log list information by adding a list name into a change log query command or acquire change log partition information by adding a partition name into the change log query command; and
search for the first change log in the change log list information or the change log partition information according to the identification information, or search for the first change log by adding the list name and the identification information into the change log query command or adding the partition name and the identification information into the change log query command.

9. The apparatus according to claim 7 or claim 8, wherein the acquisition module (10) comprises:
a receiving unit (100) configured to receive a control instruction for triggering a data recovery operation, wherein the control instruction carries the identification information; and
an acquisition unit (102) configured to perform an authentication operation on the control instruction, and acquire the identification information from the control instruction when the authentication succeeds.

10. The apparatus according to claim 9, further comprising:
a feedback module (40) configured to return prompt information corresponding to the control instruction, wherein the prompt information is for representing that the second change log has been successfully recovered to the first change log.

## Patentansprüche

1. Verfahren zum Ausführen einer Datenwiederherstellungsoperation, wobei das Verfahren Folgendes umfasst:
Erfassen von Identifikationsinformationen eines ersten Änderungsprotokolls, in das wiederhergestellt werden soll;
Suchen nach dem ersten Änderungsprotokoll gemäß den Identifikationsinformationen, wobei das Verfahren **dadurch gekennzeichnet ist, dass** es ferner Folgendes umfasst:
Wiederherstellen eines zweiten Änderungsprotokolls in das erste Änderungsprotokoll gemäß ursprünglichen Benutzerdateninformationen und ursprünglichen Metadateninformationen, die im zweiten Änderungsprotokoll aufgezeichnet sind, und modifizierten Benutzerdateninformationen und modifizierten Metadateninformationen, die im zweiten Änderungsprotokoll aufgezeichnet sind, zusätzlich zu ursprünglichen Benutzerdateninformationen und ursprünglichen Metadateninformationen, die im ersten Änderungsprotokoll aufgezeichnet sind, und modifizierten Benutzerdateninformationen und modifizierten Metadateninformationen, die im ersten Änderungsprotokoll aufgezeichnet sind,
wobei mehrere Änderungsprotokolle zwischen dem zweiten Änderungsprotokoll und dem ersten Änderungsprotokoll existieren und wobei das Wiederherstellen des zweiten Änderungsprotokolls in das erste Änderungsprotokoll Folgendes umfasst:
Parsen von ersten ursprünglichen Benutzerdaten und ersten ursprünglichen Metadaten aus dem ersten Änderungsprotokoll;
Parsen von zweiten ursprünglichen Benutzerdaten und zweiten ursprünglichen Metadaten aus dem zweiten Änderungsprotokoll;
Wiederherstellen der zweiten ursprünglichen Benutzerdaten zu den ersten ursprünglichen Benutzerdaten; und
Wiederherstellen der zweiten ursprünglichen Metadaten zu den ersten ursprünglichen Metadaten oder
Parsen von ersten ursprünglichen Benutzerdaten und ersten ursprünglichen Metadaten aus dem ersten Änderungsprotokoll;
Parsen von modifizierten Benutzerdaten und modifizierten Metadaten aus dem zweiten Änderungsprotokoll;
Wiederherstellen der modifizierten Benutzerdaten zu den ersten ursprünglichen Benutzerdaten; und
Wiederherstellen der modifizierten Metadaten zu den ersten ursprünglichen Metadaten,
wobei die modifizierten Benutzerdaten und die modifizierten Metadaten erhalten werden, indem gemäß einem Operationstyp zum Modifizieren eines im zweiten Änderungsprotokoll aufgezeichneten Objekts die im zweiten Änderungsprotokoll aufgezeichneten zweiten ursprünglichen Benutzerdaten und zweiten ursprünglichen Metadaten modifiziert werden.

2. Verfahren nach Anspruch 1, wobei das Suchen nach dem ersten Änderungsprotokoll Folgendes umfasst:
Erfassen von Änderungsprotokolllisteninformationen durch Hinzufügen eines Listennamens zu einem Änderungsprotokollabfragebefehl oder Erfassen von Änderungsprotokollpartitionsinformationen durch Hinzufügen eines Partitionsnamens zu dem Änderungsprotokollabfragebefehl, und Suchen nach dem ersten Änderungsprotokoll in den Änderungsprotokolllisteninformationen oder den Änderungsprotokollpartitionsinformationen gemäß den Identifikationsinformationen; und/oder
Suchen nach dem ersten Änderungsprotokoll durch Hinzufügen des Listennamens und der Identifikationsinformationen zum Änderungsprotokollabfragebefehl oder Hinzufügen des Partitionsnamens und der Identifikationsinformationen zum Änderungsprotokollabfragebefehl.

3. Verfahren nach Anspruch 1 oder Anspruch 2, wobei das Erfassen von Identifikationsinformationen des ersten Änderungsprotokolls Folgendes umfasst:
Empfangen einer Steueranweisung zum Auslösen einer Datenwiederherstellungsoperation, wobei die Steueranweisung die Identifikationsinformationen trägt; und
Durchführen einer Authentifizierungsoperation für die Steueranweisung und Erfassen der Identifikationsinformationen aus der Steueranweisung, wenn die Authentifizierung erfolgreich ist.

4. Verfahren nach Anspruch 3, ferner umfassend:
nach dem Wiederherstellen des zweiten Änderungsprotokolls in das erste Änderungsprotokoll, Zurückgeben von sofortigen Informationen, die der Steueranweisung entsprechen, wobei die sofortigen Informationen darstellen sollen, dass das zweite Änderungsprotokoll erfolgreich in das erste Änderungsprotokoll wiederhergestellt wurde.

5. Computerlesbares Speichermedium, das Anweisungen speichert, die, wenn sie von einem Prozessor eines Computersystems ausgeführt werden, veranlassen, dass das Computersystem das Verfahren nach einem der vorhergehenden Ansprüche ausführt.

6. Computerprogramm, umfassend Anweisungen, die, wenn das Programm von einem Prozessor eines Computer ausgeführt wird, veranlassen, dass der Computer das Verfahren nach einem der Ansprüche 1 bis 4 ausführt.

7. Vorrichtung zum Ausführen einer Datenwiederherstellungsoperation, wobei die Vorrichtung Folgendes umfasst:
ein Erfassungsmodul (10), das konfiguriert ist, um Identifikationsinformationen eines ersten Änderungsprotokolls zu erfassen, in das wiederhergestellt werden soll;
ein Suchmodul (20), das konfiguriert ist, um nach dem ersten Änderungsprotokoll gemäß den Identifikationsinformationen zu suchen, wobei die Vorrichtung **dadurch gekennzeichnet ist, dass** sie ferner Folgendes umfasst:
ein Wiederherstellungsmodul (30), das konfiguriert ist, um ein zweites Änderungsprotokoll in das erste Änderungsprotokoll gemäß ursprünglichen Benutzerdateninformationen und ursprünglichen Metadateninformationen, die im zweiten Änderungsprotokoll aufgezeichnet sind, und modifizierten Benutzerdateninformationen und modifizierten Metadateninformationen, die im zweiten Änderungsprotokoll aufgezeichnet sind, zusätzlich zu ursprünglichen Benutzerdateninformationen und ursprünglichen Metadateninformationen, die im ersten Änderungsprotokoll aufgezeichnet sind, wiederherzustellen, wobei zwischen dem zweiten Änderungsprotokoll und dem ersten Änderungsprotokoll mehrere Änderungsprotokolle existieren und modifizierte Benutzerdateninformationen und modifizierte Metadateninformationen im ersten Änderungsprotokoll aufgezeichnet sind, und wobei das Wiederherstellungsmodul Folgendes umfasst:
eine Parsing-Einheit (300), die konfiguriert ist, um erste ursprüngliche Benutzerdaten und erste ursprüngliche Metadaten aus dem ersten Änderungsprotokoll zu parsen; und
eine Wiederherstellungseinheit (302), die konfiguriert ist, um zweite ursprüngliche Benutzerdaten und zweite ursprüngliche Metadaten aus dem zweiten Änderungsprotokoll zu parsen, die zweiten ursprünglichen Benutzerdaten in den ersten ursprünglichen Benutzerdaten wiederherzustellen und die zweiten ursprünglichen Metadaten in den ersten ursprünglichen Metadaten wiederherzustellen, oder
eine Wiederherstellungseinheit (302), die konfiguriert ist, um modifizierte Benutzerdaten und modifizierte Metadaten aus dem zweiten Änderungsprotokoll zu parsen, die modifizierten Benutzerdaten in den ersten ursprünglichen Benutzerdaten wiederherzustellen und die modifizierten Metadaten in den ersten ursprünglichen Metadaten wiederherzustellen, wobei die modifizierten Benutzerdaten und die modifizierten Metadaten erhalten werden, indem gemäß einem Operationstyp zum Modifizieren eines im zweiten Änderungsprotokoll aufgezeichneten Objekts die im zweiten Änderungsprotokoll aufgezeichneten zweiten ursprünglichen Benutzerdaten und zweiten ursprünglichen Metadaten modifiziert werden.

8. Vorrichtung nach Anspruch 7, wobei das Suchmodul (20) zu Folgendem konfiguriert ist:
Erfassen von Änderungsprotokolllisteninformationen durch Hinzufügen eines Listennamens zu einem Änderungsprotokollabfragebefehl oder Erfassen von Änderungsprotokollpartitionsinformationen durch Hinzufügen eines Partitionsnamens zum Änderungsprotokollabfragebefehl; und
Suchen nach dem ersten Änderungsprotokoll in den Änderungsprotokolllisteninformationen oder den Änderungsprotokollpartitionsinformationen gemäß den Identifikationsinformationen oder Suchen nach dem ersten Änderungsprotokoll, indem der Listenname und die Identifikationsinformationen zum Änderungsprotokollabfragebefehl hinzugefügt werden oder der Partitionsname und die Identifikationsinformationen Änderungsprotokollabfragebefehl hinzugefügt werden.

9. Vorrichtung nach Anspruch 7 oder Anspruch 8, wobei das Erfassungsmodul (10) Folgendes umfasst:
eine Empfangseinheit (100), die konfiguriert ist, um eine Steueranweisung zum Auslösen einer Datenwiederherstellungsoperation zu empfangen, wobei die Steueranweisung die Identifikationsinformationen trägt; und
eine Erfassungseinheit (102), die konfiguriert ist, um eine Authentifizierungsoperation an der Steueranweisung auszuführen und die Identifikationsinformationen aus der Steueranweisung zu erfassen, wenn die Authentifizierung erfolgreich ist.

10. Vorrichtung nach Anspruch 9, ferner umfassend
ein Rückkopplungsmodul (40), das konfiguriert ist, um sofortige Informationen zurückzugeben, die der Steueranweisung entsprechen, wobei die sofortigen Informationen darstellen sollen, dass das zweite Änderungsprotokoll erfolgreich in das erste Änderungsprotokoll wiederhergestellt wurde.

## Revendications

1. Procédé d'exécution d'une opération de récupération de données, le procédé comprenant : l'acquisition d'informations d'identification d'un premier journal de modifications à récupérer; la recherche du premier journal de modifications en fonction des informations d'identification, dans lequel le procédé est **caractérisé en ce qu'**il comprend en outre :
la récupération d'un deuxième journal de modifications à partir du premier journal de modifications en fonction des informations de données utilisateur d'origine et des informations de métadonnées d'origine enregistrées dans le deuxième journal de modifications, et des informations de données utilisateur modifiées et des informations de métadonnées modifiées enregistrées dans le deuxième journal de modifications, en plus des informations de données utilisateur d'origine et des informations de métadonnées d'origine enregistrées dans le premier journal de modifications, et des informations de données utilisateur modifiées et des informations de métadonnées modifiées enregistrées dans le premier journal de modifications,
dans lequel plusieurs journaux de modifications existent entre le deuxième journal de modifications et le premier journal de modifications, et dans lequel la récupération du deuxième journal de modifications à partir du premier journal de modifications comprend :
l'analyse des premières données utilisateur d'origine et des premières métadonnées d'origine provenant du premier journal de modifications ; l'analyse des deuxièmes données utilisateur d'origine et des deuxièmes métadonnées d'origine provenant du deuxième journal de modifications ;
la récupération des deuxièmes données utilisateur d'origine à partir des premières données utilisateur d'origine ; et
la récupération des deuxièmes métadonnées d'origine à partir des premières métadonnées d'origine, ou
l'analyse des premières données utilisateur d'origine et des premières métadonnées d'origine provenant du premier journal de modifications ;
l'analyse des données utilisateur modifiées et des métadonnées modifiées provenant du deuxième journal de modifications ;
la récupération des données utilisateur modifiées à partir des premières données utilisateur d'origine ; et
la récupération des métadonnées modifiées à partir des premières métadonnées d'origine,
dans lequel les données utilisateur modifiées et les métadonnées modifiées sont obtenues en modifiant, en fonction d'un type d'opération pour modifier un objet enregistré dans le deuxième journal de modifications, des deuxièmes données utilisateur d'origine et des deuxièmes métadonnées d'origine enregistrées dans le deuxième journal de modifications.

2. Procédé selon la revendication 1, dans lequel la recherche du premier journal de modifications comprend : l'acquisition d'informations de liste de journaux de modifications en ajoutant un nom de liste dans une commande de requête de journal de modifications ou l'acquisition d'informations de partition de journal de modifications en ajoutant un nom de partition dans la commande de requête de journal de modifications, et la recherche du premier journal de modifications dans les informations de liste de journal de modifications ou dans les informations de partition de journal de modifications en fonction des informations d'identification ; et / ou
la recherche du premier journal de modifications en ajoutant le nom de la liste et les informations d'identification dans la commande de requête du journal de modifications ou en ajoutant le nom de partition et les informations d'identification dans la commande de requête du journal de modifications.

3. Procédé selon la revendication 1 ou la revendication 2, dans lequel l'acquisition des informations d'identification du premier journal de modifications comprend :
la réception d'une instruction de commande pour déclencher une opération de récupération de données, dans lequel l'instruction de commande porte les informations d'identification ; et
l'exécution d'une opération d'authentification sur l'instruction de commande, et l'acquisition des informations d'identification à partir de l'instruction de commande lorsque l'authentification réussit.

4. Procédé selon la revendication 3 comprenant en outre :
après avoir récupéré le deuxième journal de modifications à partir du premier journal de modifications, le renvoi d'informations d'invite correspondant à l'instruction de commande, les informations d'invite étant destinées à représenter que le deuxième journal de modifications a été récupéré avec succès à partir du premier journal de modifications.

5. Support de stockage lisible par ordinateur stockant des instructions qui, lorsqu'elles sont exécutées par un processeur d'un système informatique, amènent le système informatique à exécuter le procédé selon l'une quelconque des revendications précédentes.

6. Programme informatique comprenant des instructions qui, lorsque le programme est exécuté par un ordinateur, amènent l'ordinateur à exécuter le procédé selon l'une quelconque des revendications 1 à 4.

7. Appareil destiné à exécuter une opération de récupération de données, l'appareil comprenant :
un module d'acquisition (10) configuré pour acquérir des informations d'identification d'un premier journal de modifications à récupérer ;
un module de recherche (20) configuré pour rechercher le premier journal de modifications en fonction des informations d'identification, dans lequel l'appareil est **caractérisé en ce qu'**il comprend en outre :
un module de récupération (30) configuré pour récupérer un deuxième journal de modifications à partir du premier journal de modifications en fonction des informations de données utilisateur d'origine et des informations de métadonnées d'origine enregistrées dans le deuxième journal de modifications, et des informations de données utilisateur modifiées et des informations de métadonnées modifiées enregistrées dans le deuxième journal de modifications en plus des informations de données utilisateur d'origine et des informations de métadonnées d'origine enregistrées dans le premier journal de modifications, dans lequel plusieurs journaux de modifications existent entre le deuxième journal de modifications et le premier journal de modifications et des informations de données utilisateur modifiées et des informations de métadonnées modifiées enregistrées dans le premier journal de modifications, et dans lequel le module de récupération comprend :
une unité d'analyse (300) configurée pour analyser les premières données utilisateur d'origine et les premières métadonnées d'origine provenant du premier journal de modifications ; et
une unité de récupération (302) configurée pour analyser les deuxièmes données utilisateur d'origine et les deuxièmes métadonnées d'origine provenant du deuxième journal de modifications, récupérer les deuxièmes données utilisateur d'origine à partir des premières données utilisateur d'origine, et récupérer les deuxièmes métadonnées d'origine à partir des premières métadonnées d'origine, ou
une unité de récupération (302) configurée pour analyser les données utilisateur modifiées et les métadonnées modifiées provenant du deuxième journal de modifications, récupérer les données utilisateur modifiées à partir des premières données utilisateur d'origine, et récupérer les métadonnées modifiées à partir des premières métadonnées d'origine, dans lequel les données utilisateur modifiées et les métadonnées modifiées sont obtenues en modifiant, en fonction d'un type d'opération pour modifier un objet enregistré dans le deuxième journal de modifications, des deuxièmes données utilisateur d'origine et des deuxièmes métadonnées d'origine enregistrées dans le deuxième journal de modifications.

8. Appareil selon la revendication 7, dans lequel le module d'extraction (20) est configuré pour :
acquérir des informations de liste de journal de modifications en ajoutant un nom de liste dans une commande de requête de journal de modifications ou acquérir des informations de partition de journal de modifications en ajoutant un nom de partition dans la commande de requête de journal de modifications ; et
rechercher le premier journal de modifications dans les informations de liste du journal de modifications ou les informations de partition du journal de modifications en fonction des informations d'identification, ou rechercher le premier journal de modifications en ajoutant le nom de la liste et les informations d'identification dans la commande de requête du journal de modifications ou en ajoutant le nom de partition et les informations d'identification dans la commande de requête de journal de modifications.

9. Appareil selon la revendication 7 ou la revendication 8, dans lequel le module d'acquisition (10) comprend :
une unité de réception (100) configurée pour recevoir une instruction de commande pour déclencher une opération de récupération de données, dans laquelle l'instruction de commande porte les informations d'identification ; et une unité d'acquisition (102) configurée pour exécuter une opération d'authentification sur l'instruction de commande, et acquérir les informations d'identification à partir de l'instruction de commande lorsque l'authentification réussit.

10. Appareil selon la revendication 9 comprenant en outre :
un module de rétroaction (40) configuré pour renvoyer des informations d'invite correspondant à l'instruction de commande, dans lequel les informations d'invite sont destinées à représenter que le deuxième journal de modifications a été récupéré avec succès à partir du premier journal de modifications.
